# EUROPEAN PATENT APPLICATION

(11) **EP 4 674 283 A1**
(43) Date of publication of application: **07.01.2026**
(21) Application number: 24186393.5
(22) Date of filing: 03.07.2024
(51) Int. Cl.: A23L 13/40, A23L 13/72, A23L 27/26, A23B 4/12, A23B 4/20

(54) **A COMPOSITION FOR IMPARTING A CURED MEAT APPEARANCE AND/OR FLAVOUR**

(71) Applicant: Kerry Group Services International Limited, Tralee County Kerry V92 EH11 (IE)
(72) Inventor: Ahern, Joseph, Naas, County Kildare, W91 W923 (IE); Cronin, Billy, Naas, County Kildare, W91 W923 (IE); Desmond, Eoin, Naas, County Kildare, W91 W923 (IE); Doyle, Liam, Naas, County Kildare, W91 W923 (IE)
(74) Representative: Bird & Bird Società tra Avvocati S.r.l.

(57) **Abstract**

The present invention relates to a composition for imparting a cured meat appearance and/or flavour. The composition comprises at least one volatile compound, which imparts a cured meat appearance and/or flavour to foodstuff products not having a cured meat appearance and/or flavour. Also disclosed are methods of imparting a cured meat appearance and/or flavour to foodstuff products not having a cured meat appearance and/or flavour.

## Description

### Field of the invention

The present invention relates to a composition for imparting a cured meat appearance and/or flavour. The composition comprises at least one volatile compound, which imparts a cured meat appearance and/or flavour to foodstuff products not having a cured meat appearance and/or flavour. Also disclosed are methods of imparting a cured meat appearance and/or flavour to foodstuff products not having a cured meat appearance and/or flavour.

### Background to the invention

Aroma compounds are chemical compounds that have a smell or odour.

Aroma compounds can naturally be found in various foodstuff products. For example, cured meat products have a cured meat appearance and/or flavour, which is imparted to the uncured meat product during the curing process, usually by the curing agent. Consumers enjoy and desire the cured meat appearance and/or flavour.

Many curing processes involve the addition of combinations of salt, sugar, nitrate, and nitrite to achieve the desired cured meat appearance and/or flavour. However, there is a need to impart a cured meat appearance and/or flavour to foodstuff products not having a cured meat appearance and/or flavour without the use (or with reduced amounts) of at least some of salt, sugar, nitrate, and nitrite.

Flavours such as cured meat flavour affect both the sense of taste and smell. For aroma compounds to impart a flavour such as cured meat flavour to foodstuff products not having a cured meat flavour, the aroma compounds perceived by the consumer during consumption must be sufficiently volatile for transmission via the air to the olfactory system in the upper part of the nose.

Volatile compounds or volatile organic compounds (VOCs) are organic compounds that have a high vapour pressure at room temperature, which correlates with a low boiling point, which allows for transmission via the air to the olfactory system of a consumer during consumption.

There is therefore a need for a composition that can impart a cured meat appearance and/or flavour without the use of traditional curing agents and which provides sufficient aroma compounds for the cured meat appearance and/or flavour to be perceived by the consumer during consumption.

### Summary of the invention

According to a first aspect of the present invention, there is provided a composition for imparting a cured meat appearance and/or flavour, the composition comprising at least one volatile compound selected from:
(a) acetic acid;
(b) propionic acid;
(c) pivalic acid;
(d) 1,2'-dipropylene glycol-1'methyl ether;
(e) 1,1'-dipropylene glycol-2'methyl ether;
(f) 2-ethylhexanol;
(g) guaiacol;
(h) nonanal;
(i) linalool;
(j) 4-methyloctanol;
(k) 6-methyloctanol;
(l) 4-terpineol;
(m) alpha-terpineol;
(n) decanal;
(o) eugenol;
(p) trans-6,10-dimethyl-5,9-undecadien-2-one;
(q) 2,4,4-trimethylpentan-1 ,3-diol diisobutyrate;
(r) methyl dihydrojasmonate; and
(s) beta-turmerone.

Optionally, the composition comprises at least 2 of the volatile compounds. Further optionally, the composition comprises at least 3, optionally at least 4, optionally at least 5, optionally at least 6, optionally at least 7, optionally at least 8, optionally at least 9, optionally at least 10, optionally at least 11, optionally at least 12, optionally at least 13, optionally at least 14, optionally at least 15, optionally at least 16, optionally at least 17, optionally at least 18 of the volatile compounds.

Optionally, the composition comprises all of the volatile compounds. Optionally, the composition comprises all 19 of the volatile compounds.

Optionally, the composition consists at least 2 of the volatile compounds. Further optionally, the composition comprises at least 3, optionally at least 4, optionally at least 5, optionally at least 6, optionally at least 7, optionally at least 8, optionally at least 9, optionally at least 10, optionally at least 11, optionally at least 12, optionally at least 13, optionally at least 14, optionally at least 15, optionally at least 16, optionally at least 17, optionally at least 18 of the volatile compounds.

Optionally, the composition consists of all of the volatile compounds. Optionally, the composition consists of all 19 of the volatile compounds.

Optionally, the composition comprises at least one volatile compound selected from:
(a) 3 - 5 % acetic acid;
(b) 45 - 55 % propionic acid;
(c) 0.1 - 0.3 % pivalic acid;
(d) 10 - 14 % 1,2'-dipropylene glycol-1'methyl ether;
(e) 8 - 12 % 1,1'-dipropylene glycol-2'methyl ether;
(f) 5 - 9 % 2-ethylhexanol;
(g) 0.1 - 1.0 % guaiacol;
(h) 2 - 4 % nonanal;
(i) 1 - 3 % linalool;
(j) 1.0 - 1.5 % 4-methyloctanol;
(k) 0.1 - 1.0 % 6-methyloctanol;
(l) 1.0 - 1.5 % 4-terpineol;
(m) 0.1 - 1.0 % alpha-terpineol;
(n) 1.0 - 1.5 % decanal;
(o) 0.5 - 1.5 % eugenol;
(p) 0.1 - 1.0 % trans-6,10-dimethyl-5,9-undecadien-2-one;
(q) 1 - 3 % 2,4,4-trimethylpentan-1,3-diol diisobutyrate;
(r) 0.1 - 1.0 % methyl dihydrojasmonate; and
(s) 0.01 - 0.10 % beta-turmerone;
each relative to the total amount of volatile compounds (a) - (s) of the composition.

Optionally, the composition comprises at least one volatile compound selected from:
(a) 4.24 % acetic acid;
(b) 50.96 % propionic acid;
(c) 0.19 % pivalic acid;
(d) 11.62 % 1,2'-dipropylene glycol-1'methyl ether;
(e) 10.22 % 1,1'-dipropylene glycol-2'methyl ether;
(f) 6.92 % 2-ethylhexanol;
(g) 0.77% guaiacol;
(h) 3.19 % nonanal;
(i) 2.35 % linalool;
(j) 1.19 % 4-methyloctanol;
(k) 0.81 % 6-methyloctanol;
(l) 1.25 % 4-terpineol;
(m) 0.67 % alpha-terpineol;
(n) 1.31 % decanal;
(o) 1.03 % eugenol;
(p) 0.72 % trans-6,10-dimethyl-5,9-undecadien-2-one;
(q) 2.38 % 2,4,4-trimethylpentan-1,3-diol diisobutyrate;
(r) 0.16 % methyl dihydrojasmonate; and
(s) 0.04 % beta-turmerone;
each relative to the total amount of volatile compounds (a) - (s) of the composition.

Optionally, the composition comprises at least one volatile compound selected from:
(a) 1 - 4 % acetic acid;
(b) 35 - 40 % propionic acid;
(c) 0.1 - 1.0 % pivalic acid;
(d) 7- 10 % 1,2'-dipropylene glycol-1'methyl ether;
(e) 6 - 10 % 1,1'-dipropylene glycol-2'methyl ether;
(f) 6 - 7 % 2-ethylhexanol;
(g) 0.1 - 1.0 % guaiacol;
(h) 1 - 3 % nonanal;
(i) 1 - 3 % linalool;
(j) 0.5 - 1.5 % 4-methyloctanol;
(k) 0.1 - 1.0 % 6-methyloctanol;
(l) 0.5 - 1.5 % 4-terpineol;
(m) 0.5 - 1.5 % alpha-terpineol;
(n) 0.5 - 1.0 % decanal;
(o) 0.5 - 1.0 % eugenol;
(p) 0.1 - 1.0 % trans-6,10-dimethyl-5,9-undecadien-2-one;
(q) 1 - 3 % 2,4,4-trimethylpentan-1,3-diol diisobutyrate;
(r) 0.1 - 1.0 % methyl dihydrojasmonate; and
(s) 0.01 - 0.10 % beta-turmerone;
each relative to the total amount of volatile compounds of the composition.

Optionally, the composition comprises at least one volatile compound selected from:
(a) 3.24 % acetic acid;
(b) 38.94 % propionic acid;
(c) 0.15 % pivalic acid;
(d) 8.88 % 1,2'-dipropylene glycol-1'methyl ether;
(e) 7.81 % 1,1'-dipropylene glycol-2'methyl ether;
(f) 5.29 % 2-ethylhexanol;
(g) 0.59 % guaiacol;
(h) 2.44 % nonanal;
(i) 1.80 % linalool;
(j) 0.91 % 4-methyloctanol;
(k) 0.62 % 6-methyloctanol;
(l) 0.95 % 4-terpineol;
(m) 0.51 % alpha-terpineol;
(n) 1.00 % decanal;
(o) 0.78 % eugenol;
(p) 0.55 % trans-6,10-dimethyl-5,9-undecadien-2-one;
(q) 1.82 % 2,4,4-trimethylpentan-1,3-diol diisobutyrate;
(r) 0.12 % methyl dihydrojasmonate; and
(s) 0.03 % beta-turmerone;
each relative to the total amount of volatile compounds of the composition.

Optionally, the composition comprises at least one volatile compound selected from:
(a) 0.4 - 0.7 % acetic acid;
(b) 5 - 8 % propionic acid;
(c) 0.01 - 0.04 % pivalic acid;
(d) 1 - 2 % 1,2'-dipropylene glycol-1'methyl ether;
(e) 1 - 2 % 1,1'-dipropylene glycol-2'methyl ether;
(f) 0.5 - 1.5 % 2-ethylhexanol;
(g) 0.05 - 0.15 % guaiacol;
(h) 0.05 - 1.00 % nonanal;
(i) 0.05 - 0.50 % linalool;
(j) 0.05 - 0.50 % 4-methyloctanol;
(k) 0.05 - 0.50 % 6-methyloctanol;
(l) 0.05 - 0.50 % 4-terpineol;
(m) 0.05 - 0.50 % alpha-terpineol;
(n) 0.05 - 0.50 % decanal;
(o) 0.05 - 0.50 % eugenol;
(p) 0.05 - 0.15 % trans-6,10-dimethyl-5,9-undecadien-2-one;
(q) 0.05 - 0.50 % 2,4,4-trimethylpentan-1,3-diol diisobutyrate;
(r) 0.01 - 0.04 % methyl dihydrojasmonate; and
(s) 0.001 - 0.010 % beta-turmerone;
each relative to the total amount of volatile compounds of the composition.

Optionally, the composition comprises at least one volatile compound selected from:
(a) 0.48 - 0.65 % acetic acid;
(b) 5.70 - 7.85 % propionic acid;
(c) 0.02 - 0.03 % pivalic acid;
(d) 1.30 - 1.80 % 1,2'-dipropylene glycol-1'methyl ether;
(e) 1.14 - 1.57 % 1,1'-dipropylene glycol-2'methyl ether;
(f) 0.78 - 1.07 % 2-ethylhexanol;
(g) 0.09 - 0.12 % guaiacol;
(h) 0.36 - 0.50 % nonanal;
(i) 0.26 - 0.36 % linalool;
(j) 0.13 - 0.18 % 4-methyloctanol;
(k) 0.13 - 0.18 % 6-methyloctanol;
(l) 0.14 - 0.19 % 4-terpineol;
(m) 0.08 - 0.10 % alpha-terpineol;
(n) 0.15 - 0.20 % decanal;
(o) 0.12 - 0.16 % eugenol;
(p) 0.08 - 0.11 % trans-6,10-dimethyl-5,9-undecadien-2-one;
(q) 0.27 - 0.37 % 2,4,4-trimethylpentan-1,3-diol diisobutyrate;
(r) 0.02 - 0.03 % methyl dihydrojasmonate; and
(s) 0.004 - 0.006 % beta-turmerone;
each relative to the total amount of volatile compounds of the composition.

Optionally, the composition comprises at least one volatile compound selected from:
(a) 0.48 % acetic acid;
(b) 5.70 % propionic acid;
(c) 0.02 % pivalic acid;
(d) 1.30 % 1,2'-dipropylene glycol-1'methyl ether;
(e) 1.14 % 1,1'-dipropylene glycol-2'methyl ether;
(f) 0.78 % 2-ethylhexanol;
(g) 0.09 % guaiacol;
(h) 0.36 % nonanal;
(i) 0.26 % linalool;
(j) 0.13 % 4-methyloctanol;
(k) 0.13 % 6-methyloctanol;
(l) 0.14 % 4-terpineol;
(m) 0.08 % alpha-terpineol;
(n) 0.15 % decanal;
(o) 0.12 % eugenol;
(p) 0.08 % trans-6,10-dimethyl-5,9-undecadien-2-one;
(q) 0.27 % 2,4,4-trimethylpentan-1,3-diol diisobutyrate;
(r) 0.02 % methyl dihydrojasmonate; and
(s) 0.004 % beta-turmerone;
each relative to the total amount of volatile compounds of the composition.

Optionally, the composition comprises at least one volatile compound selected from:
(a) 0.65 % acetic acid;
(b) 7.85 % propionic acid;
(c) 0.03 % pivalic acid;
(d) 1.80 % 1,2'-dipropylene glycol-1'methyl ether;
(e) 1.57 % 1,1'-dipropylene glycol-2'methyl ether;
(f) 1.07 % 2-ethylhexanol;
(g) 0.12 % guaiacol;
(h) 0.50 % nonanal;
(i) 0.36 % linalool;
(j) 0.18 % 4-methyloctanol;
(k) 0.18 % 6-methyloctanol;
(l) 0.19 % 4-terpineol;
(m) 0.10 % alpha-terpineol;
(n) 0.20 % decanal;
(o) 0.16 % eugenol;
(p) 0.11 % trans-6,10-dimethyl-5,9-undecadien-2-one;
(q) 0.37 % 2,4,4-trimethylpentan-1,3-diol diisobutyrate;
(r) 0.03 % methyl dihydrojasmonate; and
(s) 0.006 % beta-turmerone;
each relative to the total amount of volatile compounds of the composition.

Alternatively, the composition comprises at least one volatile compound selected from: acetic acid; acetoin; propionic acid; 2,3-butanediol; acetol acetate; 2,5-dimethyl-3(2H)-furanone; 3-methyl-2(5H)-furanone; trimethylpyrazine; tetramethylpyrazine; nonanal; octanoic acid; 6-hexanelactam; nonanoic acid; triacetin; alpha-curcumene; 2,4-di-tert-butylphenyl acetate; beta-sesquiphellnadrene; 2,4,4-trimethylpentan-1,3-diol diisobutyrate; methyl dihydrojasmonate; beta-turmerone; ar-turmurone; and alpha-turmerone.

Optionally, the composition comprises at least one of the volatile compounds as measured using a spectrometry analytical technique. Further optionally, the composition comprises at least one of the volatile compounds as measured using a mass spectrometry analytical technique. Still further optionally, the composition comprises at least one of the volatile compounds as measured using a chromatography mass spectrometry analytical technique. Still further optionally, the composition comprises at least one of the volatile compounds as measured using a gas chromatography mass spectrometry analytical technique.

Preferably, the composition comprises at least one of the volatile compounds as measured using a gas chromatography mass spectrometry analytical technique.

Optionally, the composition comprises at least one of the volatile compounds as measured using a gas chromatography quadrupole (optionally tandem quadrupole) mass spectrometry analytical technique.

Optionally, the composition comprises at least one of the volatile compounds as measured using a gas chromatography ion trap mass spectrometry analytical technique.

Optionally, the composition comprises at least one of the volatile compounds as measured using a gas chromatography magnetic mass spectrometry analytical technique.

Optionally, the composition comprises at least one of the volatile compounds as measured using a concentrator system, optionally a purge-and-trap concentrator system, optionally a purge-closed loop concentrator system.

Optionally, the composition comprises at least one of the volatile compounds as measured using solid phase micro-extraction.

Optionally, the composition comprises at least one of the volatile compounds as measured in an at least partially dry form. Further optionally, the composition comprises at least one of the volatile compounds as measured in substantially dry form. Still further optionally, the composition comprises at least one of the volatile compounds as measured in a dry form.

Optionally, the at least one volatile compound is at least one volatile organic compound.

Optionally, the at least one volatile compound is at least one volatile organic compound having a vapour pressure of at least 0.01 kPa. Further optionally, the at least one volatile compound is at least one volatile organic compound having a vapour pressure of at least 0.01 kPa at a temperature of 20 °C.

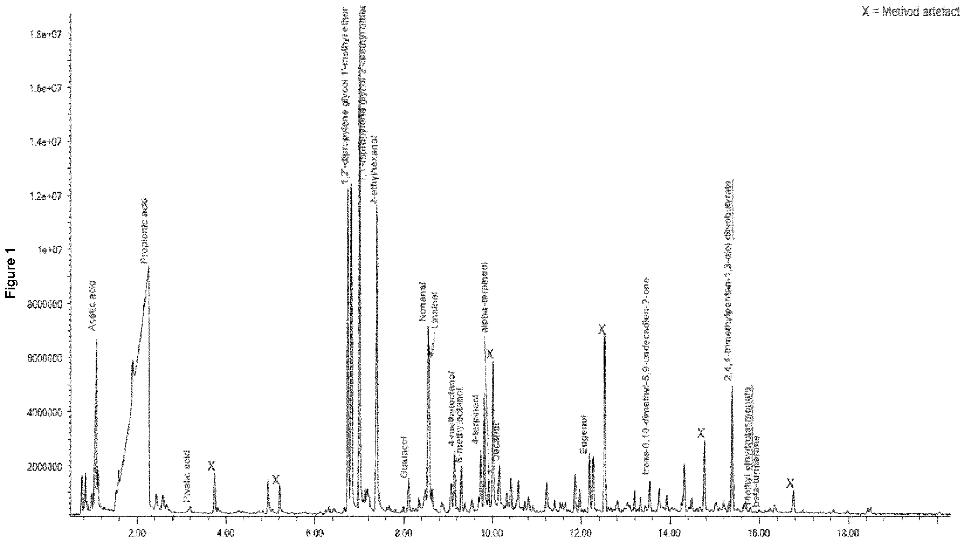

Optionally, the composition comprises the volatile compounds as defined in Figure 1.

According to a second aspect of the present invention, there is provided a composition for imparting a cured meat appearance and/or flavour, the composition comprising:
(i) 2.0 - 3.0 %(w/w) at least one anthocyanin; and
(ii) 0.1 - 80.0 %(w/w) at least one organic acid.

Optionally, the composition further comprises 10.0 - 20.0 %(w/w) at least one phosphate.

Optionally, the composition comprises:
(i) 2.0 - 3.0 %(w/w) at least one anthocyanin;
(ii) 10.0 - 20.0 %(w/w) at least one phosphate; and
(iii) 0.1 - 80.0 %(w/w) at least one organic acid.

Optionally, the composition according to the first aspect of the present invention comprises the composition according to the second aspect of the present invention.

Optionally, the composition according to the first aspect of the present invention comprises at least one volatile compound selected from:
(a) acetic acid;
(b) propionic acid;
(c) pivalic acid;
(d) 1,2'-dipropylene glycol-1'methyl ether;
(e) 1,1'-dipropylene glycol-2'methyl ether;
(f) 2-ethylhexanol;
(g) guaiacol;
(h) nonanal;
(i) linalool;
(j) 4-methyloctanol;
(k) 6-methyloctanol;
(l) 4-terpineol;
(m) alpha-terpineol;
(n) decanal;
(o) eugenol;
(p) trans-6,10-dimethyl-5,9-undecadien-2-one;
(q) 2,4,4-trimethylpentan-1,3-diol diisobutyrate;
(r) methyl dihydrojasmonate; and
(s) beta-turmerone;
and further comprises:
(i) 2.0 - 3.0 %(w/w) at least one anthocyanin; and
(ii) 0.1 - 80.0 %(w/w) at least one organic acid.

Optionally, the composition according to the first aspect of the present invention comprises at least one volatile compound selected from:
(a) acetic acid;
(b) propionic acid;
(c) pivalic acid;
(d) 1,2'-dipropylene glycol-1'methyl ether;
(e) 1,1'-dipropylene glycol-2'methyl ether;
(f) 2-ethylhexanol;
(g) guaiacol;
(h) nonanal;
(i) linalool;
(j) 4-methyloctanol;
(k) 6-methyloctanol;
(l) 4-terpineol;
(m) alpha-terpineol;
(n) decanal;
(o) eugenol;
(p) trans-6,10-dimethyl-5,9-undecadien-2-one;
(q) 2,4,4-trimethylpentan-1,3-diol diisobutyrate;
(r) methyl dihydrojasmonate; and
(s) beta-turmerone;
and further comprises:
(i) 2.0 - 3.0 %(w/w) at least one anthocyanin;
(ii) 10.0 - 20.0 %(w/w) at least one phosphate; and
(iii) 0.1 - 80.0 %(w/w) at least one organic acid.

Optionally, the composition according to the second aspect of the present invention comprises the composition according to the first aspect of the present invention.

Optionally, the composition according to the second aspect of the present invention comprises:
(i) 2.0 - 3.0 %(w/w) at least one anthocyanin; and
(ii) 0.1 - 80.0 %(w/w) at least one organic acid;
and further comprises at least one volatile compound selected from:
(a) acetic acid;
(b) propionic acid;
(c) pivalic acid;
(d) 1,2'-dipropylene glycol-1'methyl ether;
(e) 1,1'-dipropylene glycol-2'methyl ether;
(f) 2-ethylhexanol;
(g) guaiacol;
(h) nonanal;
(i) linalool;
(j) 4-methyloctanol;
(k) 6-methyloctanol;
(l) 4-terpineol;
(m) alpha-terpineol;
(n) decanal;
(o) eugenol;
(p) trans-6,10-dimethyl-5,9-undecadien-2-one;
(q) 2,4,4-trimethylpentan-1,3-diol diisobutyrate;
(r) methyl dihydrojasmonate; and
(s) beta-turmerone.

Optionally, the composition according to the second aspect of the present invention comprises:
(i) 2.0 - 3.0 %(w/w) at least one anthocyanin;
(ii) 10.0 - 20.0 %(w/w) at least one phosphate; and
(iii) 0.1 - 80.0 %(w/w) at least one organic acid;
and further comprises at least one volatile compound selected from:
(a) acetic acid;
(b) propionic acid;
(c) pivalic acid;
(d) 1,2'-dipropylene glycol-1'methyl ether;
(e) 1,1'-dipropylene glycol-2'methyl ether;
(f) 2-ethylhexanol;
(g) guaiacol;
(h) nonanal;
(i) linalool;
(j) 4-methyloctanol;
(k) 6-methyloctanol;
(l) 4-terpineol;
(m) alpha-terpineol;
(n) decanal;
(o) eugenol;
(p) trans-6,10-dimethyl-5,9-undecadien-2-one;
(q) 2,4,4-trimethylpentan-1,3-diol diisobutyrate;
(r) methyl dihydrojasmonate; and
(s) beta-turmerone.

Optionally, the composition comprises 2.0 - 3.0 %(w/w) anthocyanin. Further optionally, the composition comprises 2.0 - 2.8, optionally 2.0 - 2.7, optionally, 2.0 - 2.4, optionally 2.0 - 2.2, optionally 2.2 - 2.8, optionally 2.2 - 2.7, optionally, 2.2 - 2.4, optionally 2.7 - 2.8 %(w/w) anthocyanin. Preferably, the composition comprises 2.2 - 2.8 %(w/w) anthocyanin.

Optionally, at least one anthocyanin is at least one anthocyanidin. Preferably, at least one anthocyanin is at least one anthocyanidin.

Optionally, the at least one anthocyanidin is selected from aurantinidin, capensinidin, cyaniding, delphinidin, europinidin, hirsutidin, malvidin, pelargonidin, peonidin, petunidin, pulchellidin, and rosinidin.

Optionally, the composition comprises at least one extract comprising anthocyanin. Further optionally, the composition comprises at least one plant extract comprising anthocyanin. Still further optionally, the composition comprises at least one fruit or vegetable extract comprising anthocyanin. Still further optionally, the composition comprises at least one vegetable extract comprising anthocyanin.

Optionally, the composition comprises at least one extract selected from sweet potato, purple sweet potato, a 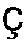 ai, blackcurrant, aronia (chokeberry), marion blackberry, black crowberry, black raspberry, raspberry, wild blueberry, cherry, queen garnet plum, redcurrant, black rice, black bean, blue corn (maize), purple corn, purple corn husks, purple tomato, concord grape, norton grape, and red cabbage extract.

Optionally, the composition comprises sweet potato extract. Preferably, the composition comprises sweet potato extract. Optionally, the composition comprises purple sweet potato extract.

Optionally, the composition comprises 25.0 - 40.0 %(w/w) at least one extract comprising anthocyanin.

Optionally, the composition comprises 25.0 - 35.0, optionally 25.0 - 33.3, optionally 25.0 - 30.0, optionally 25.0 - 27.0, optionally 27.0 - 35.0, optionally 27.0 - 33.3, optionally 27.0 - 30.0, optionally 30.0 - 35.0, optionally 30.0 - 33.3, optionally 33.3 - 35.0 %(w/w) at least one extract comprising anthocyanin.

Preferably, the composition comprises 27.0 - 35.0 %(w/w) at least one extract comprising anthocyanin.

Optionally, the composition comprises 25.0 - 35.0, optionally 25.0 - 33.3, optionally 25.0 - 30.0, optionally 25.0 - 27.0, optionally 27.0 - 35.0, optionally 27.0 - 33.3, optionally 27.0 - 30.0, optionally 30.0 - 35.0, optionally 30.0 - 33.3, optionally 33.3 - 35.0 %(w/w) sweet potato extract.

Preferably, the composition comprises 27.0 - 35.0 %(w/w) sweet potato extract.

Optionally, the composition comprises 10.0 - 20.0 %(w/w) at least one phosphate. Further optionally, the composition comprises 10.0 - 20.0, optionally 10.0 - 18.0, optionally 10.0 - 16.7, optionally 10.0 - 15.0, optionally 10.0 - 14.0, optionally 10.0 - 12.0, optionally 10.0 - 11.5, optionally 11.5 -20.0, optionally 11.5 - 18.0, optionally 11.5 - 16.7, optionally 11.5 - 15.0, optionally 11.5- 14.0, optionally 11.5 - 12.0, optionally 15.0 - 20.0, optionally 15.0- 18.0, optionally 15.0- 16.7, optionally 16.7 - 20.0, optionally 16.7 - 18.0 %(w/w) at least one phosphate.

Preferably, the composition comprises 11.5 - 16.7 %(w/w) at least one phosphate.

Optionally, the at least one phosphate is at least one diphosphate. Further optionally, the at least one phosphate is at least one diphosphate selected from sodium diphosphate, potassium diphosphate, and calcium diphosphate. Still further optionally, the at least one phosphate is at least one diphosphate selected from disodium dihydrogen diphosphate; trisodium diphosphate; tetrasodium diphosphate (TSPP); tetrapotassium diphosphate (TKPP); pentasodium triphosphate; pentapotassium triphosphate; sodium polyphosphate; potassium polyphosphate; sodium triphosphate (STP), sodium tripolyphosphate (STPP), and tripolyphosphate (TPP).

Optionally, the at least one phosphate is tetrapotassium diphosphate (TKPP) and/or sodium tripolyphosphate (STPP).

Further optionally, the at least one phosphate is tetrapotassium diphosphate (TKPP) and sodium tripolyphosphate (STPP).

Still further optionally, the at least one phosphate is 50 %(w/w) tetrapotassium diphosphate (TKPP) and 50 %(w/w) sodium tripolyphosphate (STPP).

Optionally, the composition comprises a composition comprising at least one of E450 and E451. Further optionally, the composition comprises a blend composition comprising at least one of E450 and E451. Still further optionally, the composition comprises a blend composition comprising E450 and E451. Still further optionally, the composition comprises a blend composition comprising 50 %(w/w) E450 and 50 %(w/w) E451.

Preferably, the composition comprises a blend composition comprising 50 %(w/w) E450 and 50 %(w/w) E451.

Optionally, the composition comprises 20.0 - 35.0 %(w/w) a composition comprising at least one of E450 and E451. Further optionally, the composition comprises 20.0 - 35.0, optionally 20.0 - 33.3, optionally 20.0 - 30.0, optionally 20.0 - 25.0, optionally 20.0 - 23.0, optionally 23.0 - 35.0, optionally 23.0 - 33.3, optionally 23.0 - 30.0, optionally 23.0 - 25.0, optionally 25.0 - 35.0, optionally 25.0-33.3, optionally 25.0 - 30.0, optionally 30.0 - 35.0, optionally 30.0 - 33.3, optionally 33.3 - 35.0 %(w/w) a composition comprising at least one of E450 and E451.

Optionally, the composition comprises 23.0 - 33.3 %(w/w) a composition comprising at least one of E450 and E451.

Further optionally, the composition comprises 23.0 - 33.3 %(w/w) a composition comprising E450 and E451.

Still further optionally, the composition comprises 23.0 - 33.3 %(w/w) a composition comprising 50 %(w/w) E450 and 50 %(w/w) E451.

Preferably, the composition comprises 23.0 - 33.3 %(w/w) a composition comprising 50 %(w/w) E450 and 50 %(w/w) E451.

Optionally, the at least one organic acid is at least one carboxylic acid or a salt thereof.

Optionally, the at least one organic acid is a carboxylic acid selected from formic acid (methanoic acid), acetic acid (ethanoic acid), propionic acid (propanoic acid), butyric acid (butanoic acid), and valeric acid (pentanoic acid) or a salt each thereof. Further optionally, the at least one organic acid is a carboxylic acid selected from acetic acid (ethanoic acid) and propionic acid (propanoic acid) or a salt each thereof. Still further optionally, the at least one organic acid is acetic acid (ethanoic acid) and propionic acid (propanoic acid) or a salt each thereof.

Preferably, the at least one organic acid is acetic acid (ethanoic acid) and propionic acid (propanoic acid) or a salt each thereof.

Optionally, the composition comprises at least two organic acids or a salt each thereof. Further optionally, the composition comprises two organic acids or a salt each thereof. Still further optionally, the composition comprises first and second organic acids or a salt each thereof. Still further optionally, the first and second organic acids are not the same organic acid.

Optionally, each of the first and second organic acids is a carboxylic acid or a salt each thereof. Further optionally, each of the first and second organic acids is a carboxylic acid selected from formic acid (methanoic acid), acetic acid (ethanoic acid), propionic acid (propanoic acid), butyric acid (butanoic acid), and valeric acid (pentanoic acid) or a salt each thereof. Further optionally, the first and second organic acids are acetic acid (ethanoic acid) and propionic acid (propanoic acid) or a salt each thereof.

Optionally, the organic acid salt is selected from an organic acid sodium salt, an organic acid potassium salt, and an organic acid calcium salt. Further optionally, the carboxylic acid salt is selected from a carboxylic acid sodium salt, a carboxylic acid potassium salt, and a carboxylic acid calcium salt. Preferably, the carboxylic acid salt is a carboxylic acid calcium salt.

Optionally, the carboxylic acid salt is a carboxylic acid calcium salt of at least one of acetic acid (ethanoic acid) and propionic acid (propanoic acid). Further optionally, the carboxylic acid salt is calcium acetate (calcium diacetate) and/or calcium propionate (calcium dipropanoate).

Optionally, the composition comprises 0.1 - 80.0 %(w/w) at least one organic acid. Further optionally, the composition comprises 0.1 - 80.0, optionally 0.1 - 78.5, optionally 0.1 - 70.0, optionally 0.1 - 60.0, optionally 0.1 - 50.0, optionally 0.1 - 40.0, optionally 0.1 - 30.0, optionally 0.1 - 22.0, optionally 0.1 - 20.0, optionally 0.1 - 9.5, optionally 0.1 - 1.4, optionally 0.1 - 0.7, optionally 0.7 - 80.0, optionally 0.7 - 78.5, optionally 0.7 - 70.0, optionally 0.7 - 60.0, optionally 0.7 - 50.0, optionally 0.7 - 40.0, optionally 0.7 - 30.0, optionally 0.7 - 22.0, optionally 0.7 - 20.0, optionally 0.7 - 9.5, optionally 0.7 - 1.4, optionally 1.4 - 80.0, optionally 1.4 - 78.5, optionally 1.4 - 70.0, optionally 1.4 - 60.0, optionally 1.4 - 50.0, optionally 1.4 - 40.0, optionally 1.4 - 30.0, optionally 1.4 - 22.0, optionally 1.4 - 20.0, optionally 1.4 - 9.5, optionally 9.5 - 80.0, optionally 9.5 - 78.5, optionally 9.5-70.0, optionally 9.5 - 60.0, optionally 9.5 - 50.0, optionally 9.5 - 40.0, optionally 9.5 - 30.0, optionally 9.5 - 22.0, optionally 9.5 - 20.0, optionally 20.0 - 80.0, optionally 20.0 - 78.5, optionally 20.0 - 70.0, optionally 20.0 - 60.0, optionally 20.0 - 50.0, optionally 20.0 - 40.0, optionally 20.0-30.0, optionally 20.0 - 22.0, optionally 22.0 - 80.0, optionally 22.0 - 78.5, optionally 22.0 - 70.0, optionally 22.0 - 60.0, optionally 22.0 - 50.0, optionally 22.0 - 40.0, optionally 22.0 - 30.0, optionally 30.0 - 80.0, optionally 30.0 - 78.5, optionally 30.0 - 70.0, optionally 30.0 - 60.0, optionally 30.0-50.0, optionally 30.0 - 40.0, optionally 40.0 - 80.0, optionally 40.0 - 78.5, optionally 40.0 - 70.0, optionally 40.0 - 60.0, optionally 40.0 - 50.0, optionally 50.0 - 80.0, optionally 50.0 - 78.5, optionally 50.0 - 70.0, optionally 50.0 - 60.0, optionally 60.0 - 80.0, optionally 60.0 - 78.5, optionally 60.0-70.0, optionally 60.0 - 80.0, optionally 60.0 - 78.5, optionally 60.0 - 70.0, 70.0 - 80.0, optionally 70.0 - 78.5 %(w/w) at least one organic acid.

Optionally, the composition comprises 0.1 - 10.0 %(w/w) a first organic acid. Further optionally, the composition comprises 0.1 - 10.0, optionally 0.1 - 9.5, optionally 0.1 - 8.0, optionally 0.1 - 6.0, optionally 0.1 - 4.0, optionally 0.1 - 2.0, optionally 0.1 - 1.0, optionally 0.1 - 0.7, optionally 0.7-10.0, optionally 0.7 - 9.5, optionally 0.7 - 8.0, optionally 0.7 - 6.0, optionally 0.7 - 4.0, optionally 0.7 - 2.0, optionally 0.7 - 1.0, optionally 1.0 - 10.0, optionally 1.0 - 9.5, optionally 1.0 - 8.0, optionally 1.0 - 6.0, optionally 1.0- 4.0, optionally 1.0 - 2.0, optionally 2.0 - 10.0, optionally 2.0 - 9.5, optionally 2.0 - 8.0, optionally 2.0 - 6.0, optionally 2.0 - 4.0, optionally 4.0 - 10.0, optionally 4.0-9.5, optionally 4.0 - 8.0, optionally 4.0 - 6.0, optionally 6.0 - 10.0, optionally 6.0 - 9.5, optionally 6.0 - 8.0, optionally 8.0 - 10.0, optionally 8.0 - 9.5, optionally 9.5 - 10.0 %(w/w) a first organic acid.

Optionally, the composition comprises 0.1 - 9.5 %(w/w) a first organic acid.

Optionally, the composition comprises 0.1 - 10.0 %(w/w) acetic acid. Further optionally, the composition comprises 0.1 - 10.0, optionally 0.1 - 9.5, optionally 0.1 - 8.0, optionally 0.1 - 6.0, optionally 0.1 - 4.0, optionally 0.1 - 2.0, optionally 0.1 - 1.0, optionally 0.1 - 0.7, optionally 0.7-10.0, optionally 0.7 - 9.5, optionally 0.7 - 8.0, optionally 0.7 - 6.0, optionally 0.7 - 4.0, optionally 0.7 - 2.0, optionally 0.7 - 1.0, optionally 1.0 - 10.0, optionally 1.0 - 9.5, optionally 1.0 - 8.0, optionally 1.0 - 6.0, optionally 1.0- 4.0, optionally 1.0 - 2.0, optionally 2.0 - 10.0, optionally 2.0 - 9.5, optionally 2.0 - 8.0, optionally 2.0 - 6.0, optionally 2.0 - 4.0, optionally 4.0 - 10.0, optionally 4.0-9.5, optionally 4.0 - 8.0, optionally 4.0 - 6.0, optionally '6.0 - 10.0, optionally 6.0 - 9.5, optionally 6.0 - 8.0, optionally 8.0 - 10.0, optionally 8.0 - 9.5, optionally 9.5 - 10.0 %(w/w) acetic acid.

Preferably, the composition comprises 0.1 -9.5 %(w/w) acetic acid.

Optionally, the composition comprises 1.0 - 80.0 %(w/w) a second organic acid. Further optionally, the composition comprises 1.0 - 78.5, optionally 1.0- 70.0, optionally 1.0 - 60.0, optionally 1.0-50.0, optionally 1.0- 40.0, optionally 1.0 - 30.0, optionally 1.0 - 22.0, optionally 1.0 - 20.0, optionally 1.0 - 10.0, optionally 10.0 - 78.5, optionally 10.0 - 70.0, optionally 10.0 - 60.0, optionally 10.0 - 50.0, optionally 10.0 - 40.0, optionally 10.0 - 30.0, optionally 10.0 - 22.0, optionally 10.0-20.0, optionally 20.0 - 78.5, optionally 20.0 - 70.0, optionally 20.0 - 60.0, optionally 20.0 - 50.0, optionally 20.0 - 40.0, optionally 20.0 - 30.0, optionally 20.0 - 22.0, optionally 22.0 - 78.5, optionally 22.0 - 70.0, optionally 22.0 - 60.0, optionally 22.0 - 50.0, optionally 22.0 - 40.0, optionally 22.0-30.0, optionally 30.0 - 78.5, optionally 30.0 - 70.0, optionally 30.0 - 60.0, optionally 30.0 - 50.0, optionally 30.0 - 40.0, optionally 40.0 - 78.5, optionally 40.0 - 70.0, optionally 40.0 - 60.0, optionally 40.0 - 50.0, optionally 50.0 - 78.5, optionally 50.0 - 70.0, optionally 50.0 - 60.0, optionally 60.0-78.5, optionally 60.0 - 70.0, 70.0 - 78.5 %(w/w) a second organic acid.

Preferably, the composition comprises 1.4 - 78.5 %(w/w) a second organic acid.

Optionally, the composition comprises 1.0 - 80.0 %(w/w) propionic acid. Further optionally, the composition comprises 1.0 - 78.5, optionally 1.0 - 70.0, optionally 1.0 - 60.0, optionally 1.0 - 50.0, optionally 1.0 - 40.0, optionally 1.0 - 30.0, optionally 1.0 - 22.0, optionally 1.0 - 20.0, optionally 1.0 - 10.0, optionally 10.0 - 78.5, optionally 10.0 - 70.0, optionally 10.0 - 60.0, optionally 10.0 - 50.0, optionally 10.0 - 40.0, optionally 10.0 - 30.0, optionally 10.0 - 22.0, optionally 10.0 - 20.0, optionally 20.0 - 78.5, optionally 20.0 - 70.0, optionally 20.0 - 60.0, optionally 20.0 - 50.0, optionally 20.0-40.0, optionally 20.0 - 30.0, optionally 20.0 - 22.0, optionally 22.0 - 78.5, optionally 22.0 - 70.0, optionally 22.0 - 60.0, optionally 22.0 - 50.0, optionally 22.0 - 40.0, optionally 22.0 - 30.0, optionally 30.0 - 78.5, optionally 30.0 - 70.0, optionally 30.0 - 60.0, optionally 30.0 - 50.0, optionally 30.0-40.0, optionally 40.0 - 78.5, optionally 40.0 - 70.0, optionally 40.0 - 60.0, optionally 40.0 - 50.0, optionally 50.0 - 78.5, optionally 50.0 - 70.0, optionally 50.0 - 60.0, optionally 60.0 - 78.5, optionally 60.0 - 70.0, 70.0 - 78.5 %(w/w) propionic acid.

Preferably, the composition comprises 1.4 - 78.5 %(w/w) propionic acid.

Preferably, the composition comprises 0.1 - 9.5 %(w/w) acetic acid and 1.4 - 78.5 %(w/w) propionic acid.

Optionally, the composition comprises:
(i) 2.0 - 3.0 %(w/w) at least one anthocyanin; and
(ii) 0.1 - 80.0 %(w/w) at least two organic acids.

Further optionally, the composition comprises:
(i) 2.0 - 3.0 %(w/w) at least one anthocyanin; and
(ii) 0.1 - 80.0 %(w/w) two organic acids.

Still further optionally, the composition comprises:
(i) 2.0 - 3.0 %(w/w) at least one anthocyanin; and
(ii) 0.1 - 80.0 %(w/w) first and second organic acids.

Still further optionally, the composition comprises:
(i) 2.0 - 3.0 %(w/w) at least one anthocyanin; and
(ii) 0.1 - 80.0 %(w/w) acetic acid and propionic acid.

Preferably, the composition comprises:
(i) 2.0 - 3.0 %(w/w) at least one anthocyanin; and
(ii) 0.1 - 9.5 %(w/w) acetic acid and 1.4 - 78.5 %(w/w) propionic acid.

Further preferably, the composition comprises:
(i) 2.0 - 3.0 %(w/w) at least one anthocyanin; and
(ii) 0.1 - 9.5 %(w/w) acetic acid and 1.4 - 78.5 %(w/w) calcium propionate.

Optionally, the composition comprises:
(i) 2.0 - 3.0 %(w/w) at least one anthocyanin;
(ii) 10.0 - 20.0 %(w/w) at least one phosphate; and
(iii) 0.1 - 80.0 %(w/w) at least two organic acids.

Further optionally, the composition comprises:
(i) 2.0 - 3.0 %(w/w) at least one anthocyanin;
(ii) 10.0 - 20.0 %(w/w) at least one phosphate; and
(iii) 0.1 - 80.0 %(w/w) two organic acids.

Still further optionally, the composition comprises:
(i) 2.0 - 3.0 %(w/w) at least one anthocyanin;
(ii) 10.0 - 20.0 %(w/w) at least one phosphate; and
(iii) 0.1 - 80.0 %(w/w) first and second organic acids.

Still further optionally, the composition comprises:
(i) 2.0 - 3.0 %(w/w) at least one anthocyanin;
(ii) 10.0 - 20.0 %(w/w) at least one phosphate; and
(iii) 0.1 - 80.0 %(w/w) acetic acid and propionic acid.

Preferably, the composition comprises:
(i) 2.0 - 3.0 %(w/w) at least one anthocyanin;
(ii) 10.0 - 20.0 %(w/w) at least one phosphate; and
(iii) 0.1 - 9.5 %(w/w) acetic acid and 1.4 - 78.5 %(w/w) propionic acid.

Further preferably, the composition comprises:
(i) 2.0 - 3.0 %(w/w) at least one anthocyanin;
(ii) 10.0 - 20.0 %(w/w) at least one phosphate; and
(iii) 0.1 - 9.5 %(w/w) acetic acid and 1.4 - 78.5 %(w/w) calcium propionate.

Optionally, the composition comprises vinegar. Further optionally, the composition comprises spirit vinegar. Still further optionally, the composition comprises spirit vinegar comprising 5-24 %(w/w) acetic acid.

Optionally, the composition comprises 1.0 - 10.0 %(w/w) vinegar. Further optionally, the composition comprises 1.0 - 10.0, optionally 1.0 - 9.5, optionally 1.0 - 8.0, optionally 1.0 - 7.0, optionally 1.0-6.0, optionally 1.0 - 5.4, optionally 1.0 - 4.0, optionally 1.0 - 2.0, optionally 2.0 - 10.0, optionally 2.0 - 9.5, optionally 2.0 - 8.0, optionally 2.0 - 7.0, optionally 2.0 - 6.0, optionally 2.0 - 5.4, optionally 2.0 - 4.0, optionally 4.0 - 10.0, optionally 4.0 - 9.5, optionally 4.0 - 8.0, optionally 4.0 - 7.0, optionally 4.0 - 6.0, optionally 4.0 - 5.4, optionally 5.4 - 10.0, optionally 5.4 - 9.5, optionally 5.4 - 8.0, optionally 5.4 - 7.0, optionally 5.4 - 6.0, optionally 6.0 - 10.0, optionally 6.0 - 9.5, optionally 6.0-8.0, optionally 6.0 - 7.0, optionally 7.0 - 10.0, optionally 7.0 - 9.5, optionally 7.0 - 8.0, optionally 8.0 - 10.0, optionally 8.0 - 9.5, optionally 9.5 - 10.0 %(w/w) vinegar.

Preferably, the composition comprises 5.0 - 7.0 %(w/w) vinegar.

Preferably, the composition comprises 5.0 - 7.0 %(w/w) spirit vinegar.

Optionally, the composition further comprises at least one flavouring compound. Further optionally, the composition further comprises at least one natural flavouring compound. Preferably, the composition further comprises at least one natural flavouring compound.

Optionally, the composition further comprises at least one flavouring compound selected from gammon flavour, boiled ham flavour, base ham flavour, and Probake^{®}. Further optionally, the composition further comprises at least one flavouring compound selected from gammon flavour 20718606, boiled ham flavour 20071606, boiled ham flavour 20619872, base ham flavour 20619399, and Probake^{®} 20709962.

Optionally, the composition further comprises 1.0 - 15.0 %(w/w) at least one flavouring compound. Further optionally, the composition further comprises 1.0 - 15.0, optionally 1.0 - 14.3, optionally 1.0 - 12.5, optionally 1.0 - 10.0, optionally 1.0 - 7.5, optionally 1.0 - 7.0, optionally 1.0 - 5.0, optionally 1.0 - 3.5, optionally 1.0 - 2.5, optionally 2.5 - 15.0, optionally 2.5 - 14.3, optionally 2.5 - 12.5, optionally 2.5 - 10.0, optionally 2.5 - 7.5, optionally 2.5 - 7.0, optionally 2.5 - 5.0, optionally 2.5 - 3.5, optionally 3.5 - 15.0, optionally 3.5 - 14.3, optionally 3.5 - 12.5, optionally 3.5 - 10.0, optionally 3.5 - 7.5, optionally 3.5 - 7.0, optionally 3.5 - 5.0, optionally 5.0 - 15.0, optionally 5.0 - 14.3, optionally 5.0 - 12.5, optionally 5.0 - 10.0, optionally 5.0 - 7.5, optionally 5.0 - 7.0, optionally 7.0 - 15.0, optionally 7.0 - 14.3, optionally 7.0 - 12.5, optionally 7.0 - 10.0, optionally 7.0 - 7.5, optionally 7.5 - 15.0, optionally 7.5 - 14.3, optionally 7.5 - 12.5, optionally 7.5 - 10.0, optionally 10.0 - 15.0, optionally 10.0 - 14.3, optionally 10.0 - 12.5, optionally 12.5 - 15.0, optionally 12.5 - 14.3, optionally 14.3- 15.0 %(w/w) at least one flavouring compound.

Optionally, the composition further comprises at least one carrier.

Optionally, the composition comprises 2.0 - 3.0 %(w/w) anthocyanin; 0.1 - 80.0 %(w/w) organic acids; and at least one carrier.

Optionally, the composition comprises 2.0 - 3.0 %(w/w) anthocyanin; 10.0 - 20.0 %(w/w) phosphates; 0.1 - 80.0 %(w/w) organic acids; and at least one carrier.

Optionally, the carrier is selected from dextrins and maltodextrins. Preferably, the carrier is maltodextrin. Optionally, the carrier is a digestible maltodextrin.

Optionally, the composition comprises 2.0 - 16.0 %(w/w) at least one carrier. Further optionally, the composition comprises 2.0 - 15.5, optionally 2.0 - 11.33, optionally 3.5 - 16.0, optionally 3.5 - 15.5, optionally 3.5 - 11.33, optionally 4.0 - 16.0, optionally 4.0 - 15.5, optionally 4.0 - 11.33, optionally 6.0 - 16.0, optionally 6.0 - 15.5, optionally 6.0 - 11.33, optionally 8.0 - 16.0, optionally 8.0 - 15.5, optionally 8.0 - 11.33, optionally 10.0 - 16.0, optionally 10.0 - 15.5, optionally 10.0- 11.33, optionally 12.0 - 16.0, optionally 12.0 - 15.5, optionally 11.33 - 12.0, optionally 14.0- 16.0, optionally 14.0 - 15.5, optionally 11.33 - 14.0 %(w/w) at least one carrier. Preferably, the composition comprises 3.5 - 15.5 %(w/w) at least one carrier.

Preferably, the composition comprises 3.5 - 15.5 %(w/w) maltodextrin.

Optionally or additionally, the composition further comprises water.

Optionally, the composition comprises 2.0 - 3.0 %(w/w) anthocyanin; 0.1 - 80.0 %(w/w) organic acids; and water.

Optionally, the composition comprises 2.0 - 3.0 %(w/w) anthocyanin; 10.0 - 20.0 %(w/w) phosphates; 0.1 - 80.0 %(w/w) organic acids; and water.

Optionally, the composition comprises 2.0 - 3.0 %(w/w) anthocyanin; 0.1 - 80.0 %(w/w) organic acids; at least one carrier; and water.

Optionally, the composition comprises 2.0 - 3.0 %(w/w) anthocyanin; 10.0 - 20.0 %(w/w) phosphates; 0.1 - 80.0 %(w/w) organic acids; at least one carrier; and water.

Optionally, the composition comprises 80.0 - 90.0 %(w/w) water. Optionally, the composition comprises 80.0 - 88.0, optionally 80.0 - 86.0, optionally 80.0 - 84.4, optionally 80.0 - 82.0, optionally 81.5 - 88.0, optionally 81.5 - 86.0, optionally, optionally 81.5 - 82.0, optionally 82.0 - 88.0, optionally 82.0 - 86.0, optionally 82.0 - 84.4, optionally 84.0 - 88.0, optionally 84.0 - 86.0, optionally 86.0 - 88.0 %(w/w) water. Preferably, the composition comprises 81.5 - 84.4 %(w/w) water.

Preferably, the composition comprises 81.5 - 84.4 %(w/w) water.

Optionally or additionally, the composition further comprises at least one salt.

Optionally, the composition comprises 2.0 - 3.0 %(w/w) anthocyanin; 0.1 - 80.0 %(w/w) organic acids; and at least one salt.

Optionally, the composition comprises 2.0 - 3.0 %(w/w) anthocyanin; 10.0 - 20.0 %(w/w) phosphates; 0.1 - 80.0 %(w/w) organic acids; and at least one salt.

Optionally, the composition comprises 2.0 - 3.0 %(w/w) anthocyanin; 0.1 - 80.0 %(w/w) organic acids; at least one carrier; and at least one salt.

Optionally, the composition comprises 2.0 - 3.0 %(w/w) anthocyanin; 10.0 - 20.0 %(w/w) phosphates; 0.1 - 80.0 %(w/w) organic acids; at least one carrier; and at least one salt.

Optionally, the composition comprises 2.0 - 3.0 %(w/w) anthocyanin; 0.1 - 80.0 %(w/w) organic acids; at least one carrier; water; and at least one salt.

Optionally, the composition comprises 2.0 - 3.0 %(w/w) anthocyanin; 10.0 - 20.0 %(w/w) phosphates; 0.1 - 80.0 %(w/w) organic acids; at least one carrier; water; and at least one salt.

Optionally, the at least one salt is selected from a sodium salt, a potassium salt, and a calcium salt. Preferably, the at least one salt is a sodium salt.

Optionally, the at least one salt is a halide salt. Further optionally, the at least one salt is a chloride salt. Preferably, the at least one salt is a chloride salt.

Optionally, the at least one salt is a sodium chloride salt. Preferably, the at least one salt is a sodium chloride salt.

Optionally, the composition comprises 1.0 - 10.0 %(w/w) at least one salt.

Further optionally, the composition comprises 2.0 - 8.0, optionally 2.0 - 7.5, optionally 4.0 - 8.0, optionally 4.0 - 7.5, optionally 6.0 - 8.0, optionally 6.0 - 7.5, optionally 7.5 %(w/w) at least one salt. Preferably, the composition comprises 7.5 %(w/w) at least one salt.

Preferably, the composition comprises 7.5 %(w/w) sodium chloride salt.

According to a third aspect of the present invention, there is provided a method for imparting a cured meat appearance and/or flavour to a foodstuff product, the method comprising the steps of:
(a) providing a composition according to the first or second aspect of the present invention;
(b) contacting the composition with the foodstuff product; and
(c) imparting a cured meat appearance and/or flavour to the foodstuff product.

Optionally, the providing step comprises providing a solution of the composition. Further optionally, the providing step comprises providing an aqueous solution of the composition.

Optionally, the providing step comprises providing a solution of the composition and mixing, optionally shear mixing, optionally medium shear mixing, the solution. Further optionally, the providing step comprises providing an aqueous solution of the composition and mixing, optionally shear mixing, optionally medium shear mixing, the aqueous solution.

Optionally, the contacting step comprises contacting the composition with the foodstuff in a ratio of 10.0 - 40.0 %(w/w) of the composition relative to the foodstuff. Further optionally, the contacting step comprises contacting the composition with the foodstuff in a ratio of 10.0 - 40.0, optionally 10.0 - 35.0, optionally 10.0 - 30.0, optionally 10.0 - 25.0, optionally 10.0 - 20.0, optionally 10.0 - 15.0, optionally 15.0 - 40.0, optionally 15.0 - 35.0, optionally 15.0 - 30.0, optionally 15.0 - 25.0, optionally 15.0 - 20.0, optionally 20.0 - 40.0, optionally 20.0 - 35.0, optionally 20.0 - 30.0, optionally 20.0-25.0, optionally 25.0 - 40.0, optionally 25.0 - 35.0, optionally 25.0 - 30.0, optionally 30.0 - 40.0, optionally 30.0 - 35.0, optionally 35.0 - 40.0 %(w/w) of the composition relative to the foodstuff.

Optionally, the contacting step comprises introducing the composition to the foodstuff product. Further optionally, the contacting step comprises introducing the composition into the foodstuff product. Further optionally, the contacting step comprises injecting the composition into the foodstuff product.

Optionally, the contacting step comprises introducing the composition to the foodstuff product under pressure, optionally a pressure of about 36.3 psi. Further optionally, the contacting step comprises introducing the composition into the foodstuff product under pressure, optionally a pressure of about 36.3 psi. Further optionally, the contacting step comprises injecting the composition into the foodstuff product under pressure, optionally a pressure of about 36.3 psi.

Optionally, the contacting step comprises agitating the composition and foodstuff product.

Optionally, the contacting step is conducted at a temperature of at least 5 °C. Further optionally, the contacting step is conducted at a temperature of at least 6 °C, optionally at least 7 °C, optionally at least 8 °C, optionally at least 9 °C, optionally at least 10 °C.

Optionally, the contacting step is conducted at a temperature of less than 10 °C. Further optionally, the contacting step is conducted at a temperature of less than 9 °C, optionally less than 8 °C, optionally less than 7 °C, optionally less than 6 °C, optionally than 5 °C.

Optionally, the contacting step is conducted for at least 10 mins. Further optionally, the contacting step is conducted for at least 20 mins, optionally at least 30 mins, optionally at least 40 mins, optionally at least 50 mins, optionally at least 60 mins.

Throughout this disclosure, all amounts are % weight relative to the weight of the total composition, unless specified otherwise.

### Brief description of the drawings

Figure 1 is a gas chromatogram illustrating volatile compounds of a composition for imparting a cured meat appearance and/or flavour;
Figure 2 is a graph illustrating a composition for imparting a cured meat appearance and/or flavour achieved parity in overall liking compared to a control composition comprising nitrite;
Figure 3 is a graph illustrating a composition for imparting a cured meat appearance and/or flavour achieved parity in overall flavour compared to a control composition comprising nitrite;
Figure 4 is a graph illustrating a composition for imparting a cured meat appearance and/or flavour achieved parity in poultry flavour compared to a control composition comprising nitrite;
Figure 5 is a graph illustrating a composition for imparting a cured meat appearance and/or flavour achieved parity in savoury flavour compared to a control composition comprising nitrite;
Figure 6 is a graph illustrating a composition for imparting a cured meat appearance and/or flavour achieved parity in instrumental colour compared to a control composition comprising nitrite;
Figure 7 is a graph illustrating a composition for imparting a cured meat appearance and/or flavour achieved parity in poultry flavour compared to a control composition comprising nitrite;
Figure 8 is a graph illustrating a composition for imparting a cured meat appearance and/or flavour achieved parity in savoury flavour compared to a control composition comprising nitrite;
Figure 9 is a graph illustrating a composition for imparting a cured meat appearance and/or flavour achieved parity in colour, aroma, flavour, and texture liking compared to a control composition comprising nitrite;
Figure 10 is a graph illustrating a composition for imparting a cured meat appearance and/or flavour achieved parity in overall flavour compared to a control composition comprising nitrite; and
Figure 11 is a graph illustrating a composition for imparting a cured meat appearance and/or flavour achieved parity in instrumental colour compared to a control composition comprising nitrite over time.

### Examples

Embodiments of the present invention will now be described by way of the following non-limiting examples.

### Example 1

### Preparation of a composition for imparting a cured meat appearance and/or flavour

Compositions A - C for imparting a cured meat appearance and/or flavour were prepared using the materials in Tables 1 - 3, respectively.

**Table 1. Composition A for imparting a cured meat appearance and/or flavour**

| **Material** | **%(w/w)** |
|---|---|
| Sweet potato extract | 33.3 |
| E450, E451 blend | 33.3 |
| Maltodextrin | 11.3 |
| Probake^{®} | 10.0 |
| Natural Flavouring | 7.0 |
| Spirit Vinegar | 5.0 |

**Table 2. Composition B for imparting a cured meat appearance and/or flavour**

| **Material** | **%(w/w)** |
|---|---|
| Sweet potato extract | 35.0 |
| E450, E451 blend | 30.0 |
| Maltodextrin | 14.3 |
| Probake^{®} | 11.9 |
| Spirit Vinegar | 5.4 |
| Natural Flavouring | 3.5 |

**Table 3. Composition C for imparting a cured meat appearance and/or flavour**

| **Material** | **%(w/w)** |
|---|---|
| Sweet potato extract | 30 |
| E450, E451 blend | 25.55 |
| Maltodextrin | 17.22 |
| Probake^{®} | 15.56 |
| Spirit Vinegar | 7.78 |
| Natural Flavouring | 3.89 |

Sweet potato extract is an extract comprising anthocyanin that can be obtained, for example, as Hansen Sweet Potato^{™} (Oterra, 2970 Hoersholm, Denmark).

E450, E451 blend is a composition comprising phosphate such as diphosphate that can be obtained, for example, as a blend of 50 %(w/w) tetrapotassium diphosphate (TKPP) and 50 %(w/w) sodium tripolyphosphate (STPP) (Kerry Group, Ireland).

Maltodextrin is a digestible maltodextrin that can be obtained, for example, as Maltodextrin 20037427 (Kerry Group, Ireland).

ProBake^{®} is a composition comprising the organic acid salt calcium propionate (Kerry Group, Ireland).

Natural Flavouring is at least one flavouring compound, such as gammon flavour 20718606, boiled ham flavour 20071606, boiled ham flavour 20619872, and/or base ham flavour 20619399 (Kerry Group, Ireland).

Spirit Vinegar is a vinegar comprising 5 - 24 %(w/w) acetic acid that can be obtained, for example, as Spirit Vinegar 20042709 (Kerry Group, Ireland).

Briefly, each of the materials was weighed to the amounts indicated using a bench scale (ICS689-CC60, Mettler Toledo, Ireland), and added to a dry blender (UT50 Mixer, Winkworth Machinery Ltd, UK) at room temperature (about 20 - 22 °C) while blending at slow speed until the materials have been added to the blend. The mix of materials is then blended at high speed (about 60 rpm) for about 5 min to ensure a completely uniform blend.

### Example 2

### Volatile compound analysis of a composition for imparting a cured meat appearance and/or flavour

Composition A was prepared as described in Example 1.

An approximately 1.0 g of neat sample was weighed into a 20 ml head-space vial and sealed. The sample was heated to about 70 °C for 5 min under agitation at 250 rpm. The DVB/Carbon WR/PDMS solid phase microextraction fibre was then exposed to the headspace for 10 min during agitation at 250rpm before introduction into the gas chromatography (GC) inlet.

Volatile compounds were separated and identified by utilising a single quadrupole Shimadzu QP2020 NX gas chromatograph-mass spectrometer with a Shimadzu AOC-6000 Plus multifunctional autosampler. The GC-MS was equipped with an Agilent DB-1MS UI GC column with a length of 30m, inner diameter of 0.25mm and film thickness of 0.25µm. The autosampler was equipped with an Agilent DVB/Carbon WR/PDMS solid phase microextraction fibre with a gauge of 23 and a phase thickness of 80 µm. The flow of helium as a carrier gas was determined to be at the rate of 4.0ml/min.

The analysis was conducted in splitless mode and injector temperature of 250 °C. The oven temperature program initially started at 40 °C for 3 min followed by a temperature ramp of 10 °C/min to 240 °C and held for 5 min. For volatile compound detection, the temperature for the electron impact source was set at 200 °C, and 280 °C for the interface. The instrument was operated in electron ionization (EI) mode with a scan range of 35 to 650 m/z.

The resulting GC-MS chromatogram is illustrated in Figure 1.

The amount of each volatile compound of the composition was determined by calculating the area of the respective peak of the resulting GC-MS chromatogram illustrated in Figure 1.

The relative amount of each volatile compound of the composition was determined by calculating the area of the respective peak of the resulting GC-MS chromatogram illustrated in Figure 1 relative to the total amount of volatile compounds (a) - (s) of the composition.

Alternatively, the relative amount of each volatile compound of the composition was determined by calculating the area of the respective peak of the resulting GC-MS chromatogram illustrated in Figure 1 relative to the total amount of volatile compounds of the composition.

Further alternatively, the relative amount of each volatile compound of the composition was determined by calculating the area of the acetic acid peak of the resulting GC-MS chromatogram illustrated in Figure 1, attributing the area of the acetic acid peak to the known amount of acetic acid in the composition, calculating the area of each volatile compound peak of the resulting GC-MS chromatogram illustrated in Figure 1, and attributing the area of each volatile compound peak to the amount of each volatile compound in the composition based on the area of the acetic acid peak attributed to the known amount of acetic acid in the composition.

Still further alternatively, the relative amount of each volatile compound of the composition was determined by calculating the area of the propionic acid peak of the resulting GC-MS chromatogram illustrated in Figure 1, attributing the area of the propionic acid peak to the known amount of propionic acid in the composition, calculating the area of each volatile compound peak of the resulting GC-MS chromatogram illustrated in Figure 1, and attributing the area of each volatile compound peak to the amount of each volatile compound in the composition based on the area of the propionic acid peak attributed to the known amount of propionic acid in the composition.

### Example 3

### Imparting a cured meat appearance and/or flavour to a foodstuff product

Compositions A-C were prepared as described in Example 1.

Each of the compositions was made into an aqueous solution with chilled (about 1 - 7 °C) potable water at pH 7.0. Briefly, about 100 g of each of the compositions was added to 1 kg of water with constant stirring at room temperature until a uniform solution was formed. About 75 g of salt was added to the solution and subjected to medium shear mixing for about 5 min at room temperature until a final solution is formed. The final solution was either used immediately or stored at about 4 °C until use.

For comparison, a comparative composition was prepared in the form of an aqueous solution of nitrite salt with chilled (about 1 - 7 °C) potable water at pH 7.0. Briefly, about 60 g of nitrite salt was added to 1 kg of water with constant stirring at room temperature until a uniform solution was formed. About 75 g of salt was added to the solution and subjected to medium shear mixing for about 5 min at room temperature until a final solution is formed. The final solution was either used immediately or stored at about 4 °C until use.

Foodstuff samples were prepared in the form of pork meat samples not having a cured meat appearance and/or flavour, poultry meat samples not having a cured meat appearance and/or flavour, and emulsified sausage samples not having a cured meat appearance and/or flavour.

For preparation of pork meat samples, 6D pork leg muscles (boneless pork leg, without shank and sinews, having outer and inner surface defatted by machine (without membrane), and separated by 5 muscles) were obtained from an EU-approved Irish slaughter house (Rosderra, IE 356) and injected with 25.0 %(w/w) of Composition A for imparting a cured meat appearance and/or flavour (final solution) relative to the meat sample, and mechanically treated using 36.3 psi pressure with medium advance conveyor speed using a Günther Injector (PI 365-54/75/105, Günther, Eppertshausen, Germany). In addition, the meat samples were either tenderised with 6 mm needle treatment and/or disk maceration with toothed circular blades. When injection and mechanical treatment were completed, the meat samples were added to a cooled vacuum tumbler (120 L, Gernal, Belgium) and subjected to continuous rotation at 12 rpm at a temperature not less than 5 °C and not exceeding 10 °C until such time as the composition for imparting a cured meat appearance and/or flavour (final solution) was completely absorbed. The tumbler was generally run for 3 or more hours, intermittently, of 5 minutes running and 5 minutes resting under the same temperature and vacuum conditions. The tumbled meat samples were then filled into casings and/or lined moulds and cooked in a chamber (1704-001 Smokehouse, PROTECH FOOD MACHINERY AB, Sweden) set at a temperature of 72 °C with full steam and 100% humidity selected until the core temperature of the filled casing reached 68 °C as determined via a temperature probe reading (HYGIPLAS EASYTEMP). Optimally, the meat sample is cooked in stages of 1 h at 60 °C, 1 h at 65 °C and finally 1 h at 72 °C.

For preparation of poultry meat samples, fillets of turkey or chicken were commercially obtained (McCaughey Foods, Ireland and Manor Farm Poultry, Ireland) and were ground at a temperature of <5 °C to a diameter of 10 mm using a meat grinder (PC 98/32, EQUIPAMIENTOS CÁRNICOS, S.L. (MAINCA), Spain). 25.0 %(w/w) of Composition B for imparting a cured meat appearance and/or flavour (final solution) was added to the ground meat sample and mixed for 30 - 45 min at 4 °C under vacuum in a paddle mixer (Cato 50L, Roser Group, Spain). Once mixed, the meat samples were filled into impermeable casing of 100 mm diameter and cooked in a chamber (1704-001 Smokehouse, PROTECH FOOD MACHINERY AB, Sweden) set at a temperature of 72 °C with full steam and 100% humidity selected until the core temperature of the filled casing reached 68 °C. Optimally, the meat sample is cooked in stages of 1 h at 60 °C, 1 h at 65 °C and finally 1 h at 72 °C.

For preparation of emulsified sausage samples, pork shoulder meat and back fat was obtained from an EU-approved Irish slaughter house (Rosderra, IE 356) and the pork shoulder meat was emulsified (chopped ) with 25.0 %(w/w) of Composition C for imparting a cured meat appearance and/or flavour (final solution) for 2 min at 0 °C in a vacuum bowl cutter (Kilia, Germany). Once mixed, pork back fat was added and cutting at high speed (for about 4 mins) under vacuum continued until a temperature of 16 °C is achieved. The meat samples were then filled into 20 -150mm diameter sausage casings and cooked in a chamber (1704-001 Smokehouse, PROTECH FOOD MACHINERY AB, Sweden) set at a temperature of 72 °C with full steam and 100% humidity selected until the core temperature of the filled casing reached 68 °C as determined via a temperature probe reading (HYGIPLAS EASYTEMP). Optimally, the meat sample is cooked in stages of 1 h at 60 °C, 1 h at 65 °C and finally 1 h at 72 °C.

The meat samples treated with the comparative composition comprising nitrite salt were prepared in the same way as described above, except that warming of meat samples treated with the comparative composition took place at 50 °C. For hotdog type products, the time is typically no greater than 30 mins. (For larger diameter cured meats and whole meats, a period of 60 mins at 50 °C is commonly used) . This warming time is used to ensure secure completion of the cured meat appearance and/or flavour development, allowing a greater rate of reaction at the more elevated temperature (now above chill temperature) in the meat sample.

The compositions contacting the foodstuff product to impart a cured meat appearance and/or flavour to the foodstuff product are defined in Tables 4-6.

**Table 4. Composition A when imparting a cured meat appearance and/or flavour to a foodstuff product**

| **Material** | **% (w/w)** |
|---|---|
| Pork leg meat | 80.0 |
| Water | 16.3 |
| Salt | 1.5 |
| Sweet potato extract | 0.7 |
| E450, E451 blend | 0.7 |
| Maltodextrin | 0.3 |
| Probake^{®} | 0.2 |
| Natural Flavourings | 0.2 |
| Spirit Vinegar | 0.1 |

**Table 5. Composition B when imparting a cured meat appearance and/or flavour to a foodstuff product**

| **Material** | **% (w/w)** |
|---|---|
| Poultry meat | 80.0 |
| Water | 17.1 |
| Salt | 1.5 |
| Sweet potato extract | 0.4 |
| E450, E451 blend | 0.4 |
| Maltodextrin | 0.3 |
| Probake^{®} | 0.2 |
| Spirit vinegar powder | 0.1 |
| Natural Flavourings | 0.1 |

**Table 6. Composition C when imparting a cured meat appearance and/or flavour to a foodstuff product**

| **Material** | **% (w/w)** |
|---|---|
| Pork shoulder meat | 60.0 |
| Water | 21.1 |
| Pork back fat | 15.0 |
| Salt | 1.5 |
| Seasoning | 1.0 |
| Maltodextrin | 0.4 |
| Sweet potato extract | 0.3 |
| E450, E451 blend | 0.3 |
| Probake^{®} | 0.2 |
| Natural Flavourings | 0.1 |
| Spirit Vinegar | 0.1 |

### Example 4

### Sensory evaluation of a composition for imparting a cured meat appearance and/or flavour

Sensory testing was carried out according to the procedures of ISO 13299:2016 and AMSA guidelines under white light in a sensory laboratory that meets the requirements of ISO 8589:2007.

A total of 50 participants (61% female, 39% male) were recruited from the Kerry Group, Ireland employee base. Recruited participants were all consumers of pork meat products, albeit at differing frequencies (6% consumed pork products on a daily basis, 48% consumed pork products on a weekly basis, 33% consumed pork products several times a month and 13% consumed pork products at least every 6 months), and of poultry meat products (consumed poultry products at least every 6 months).

Each participant was presented with a half slice of a meat sample (10-12 g) in a covered pot and labelled with a 3-digit code in sequential monadic order in a randomised fashion.

This study utilised a 10-point Hedonic scale to capture liking scores of participants, incorporating scale points ranging from 1 = Extremely Dislike up to 10 = Extremely Like.

In addition, participants were asked to score meat samples on overall liking, appearance liking, aroma liking, flavour/ taste and texture mouthfeel.

Additionally, a 5 point JAR (just about right) scale was utilised to evaluate participants' perceptions of meat samples, wherein scale categories were labelled as follows; -2, -1 = Too Light/Too Weak, 3 = Just About Right, 1, 2 = Too Dark/Too Strong. Participants were asked to score the following sensory characteristics of meat samples; colour, overall flavour, salt taste, savoury taste and sweet taste.

Colour was assessed using the instrumental Hunter colour method as originally defined by Hunter, Richard S., and Harold, Richard W; The Measurement of Appearance, 2nd ed., John Wiley and Sons, Inc. New York, NY USA, 1987. CIE International Commission on Illumination, Recommendations on Uniform Color Spaces, Color-Difference Equations, Psychometric Color Terms, Supplement No. 2 to CIE Publication No. 15, Colorimetry, 1971 and 1978.

The colour was assessed of 5 different slices of a meat sample (100 g) using a CM-5 Chronometer/Spectrophotometer 1104105 (Konica Minolta Business Solutions Europe GmbH, Langenhagen, Germany) according to the manufacturer's instructions.

Data were statistically analysed using mixed model ANOVA, with Fisher's LSD test. Statistical analysis was performed to determine the differences between meat samples based upon liking scores and JAR scores. Differences were considered significant when p was less than 0.05.

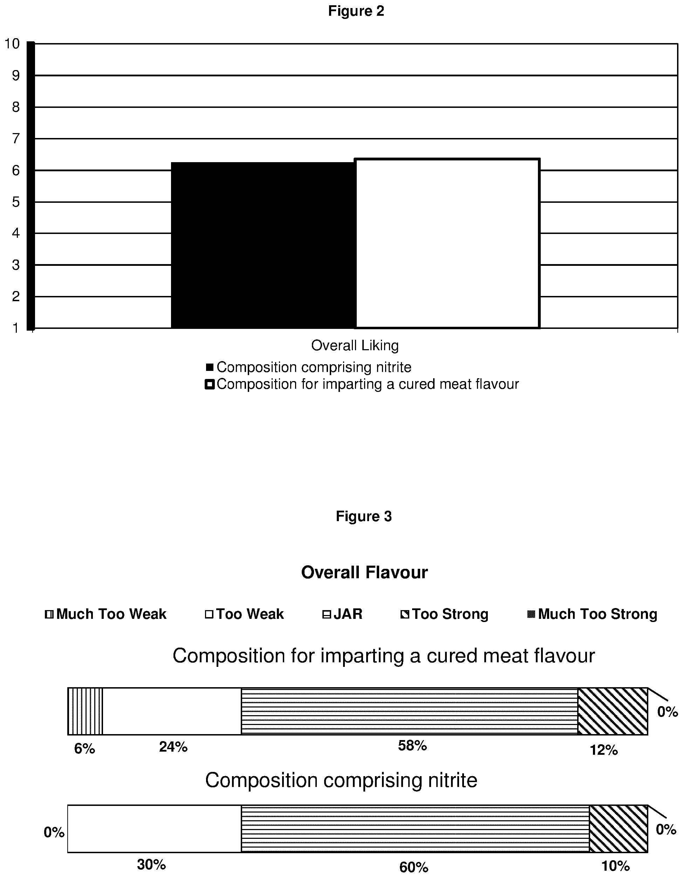

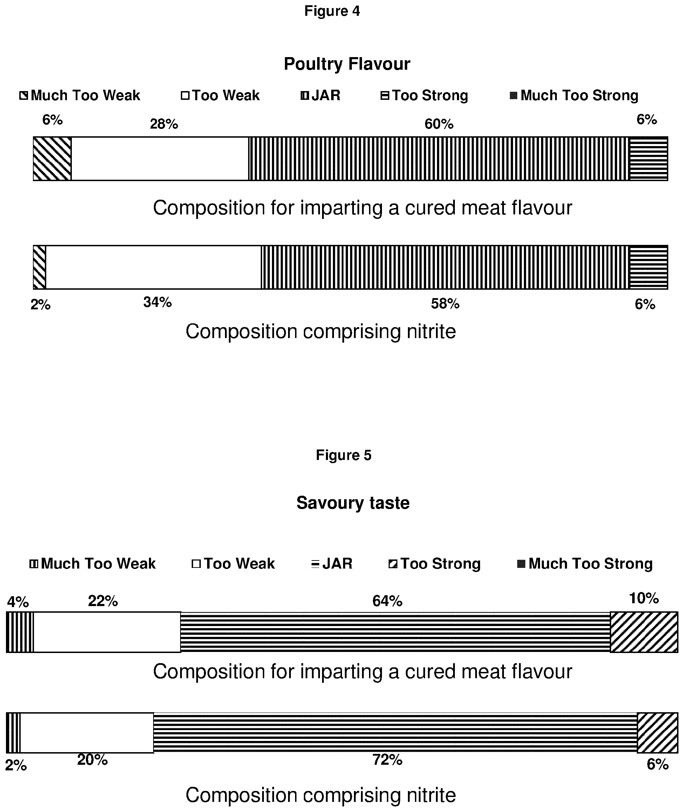

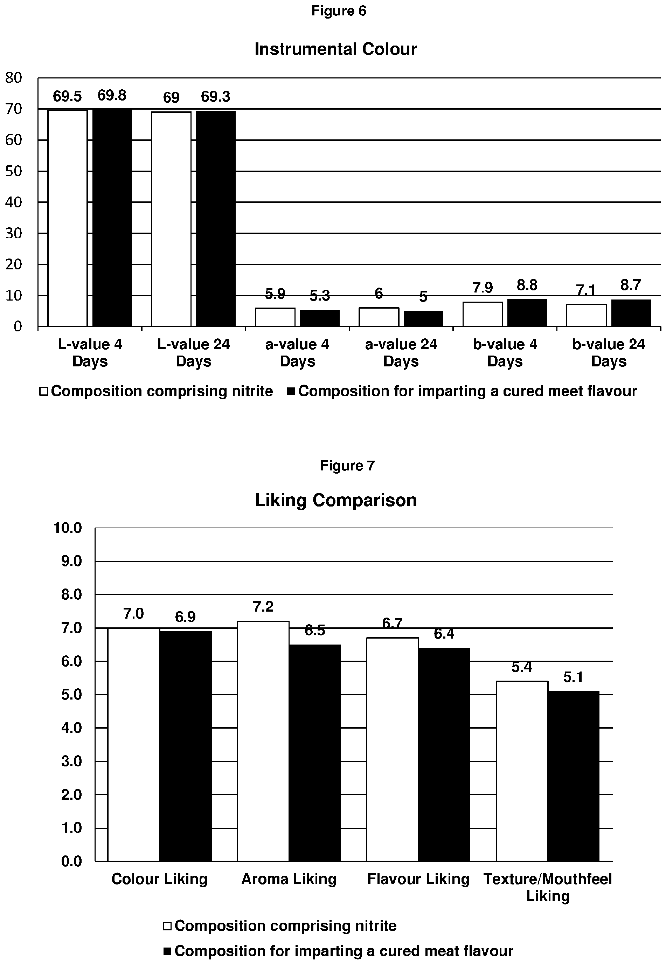

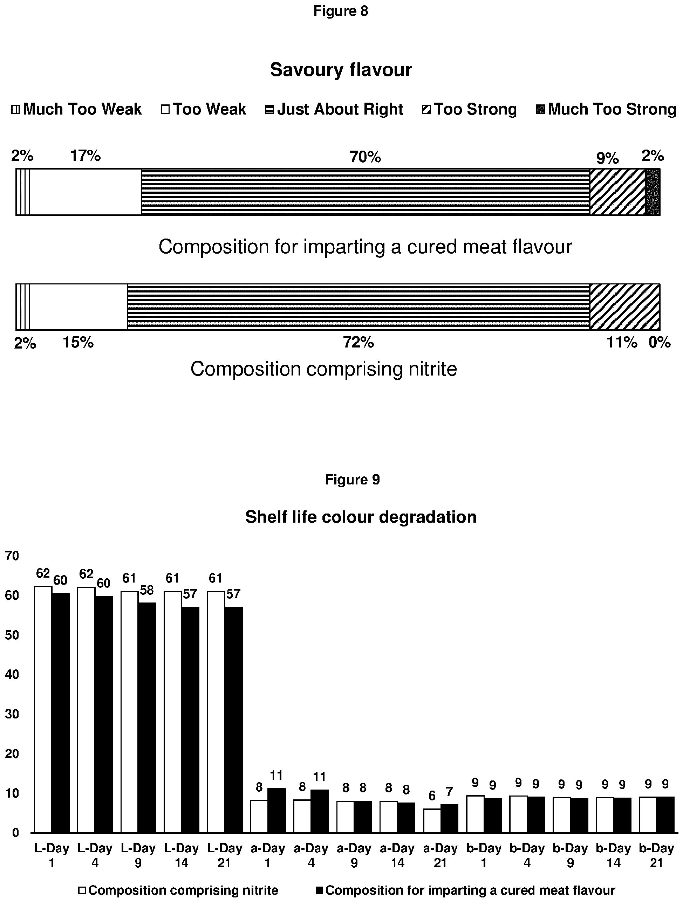

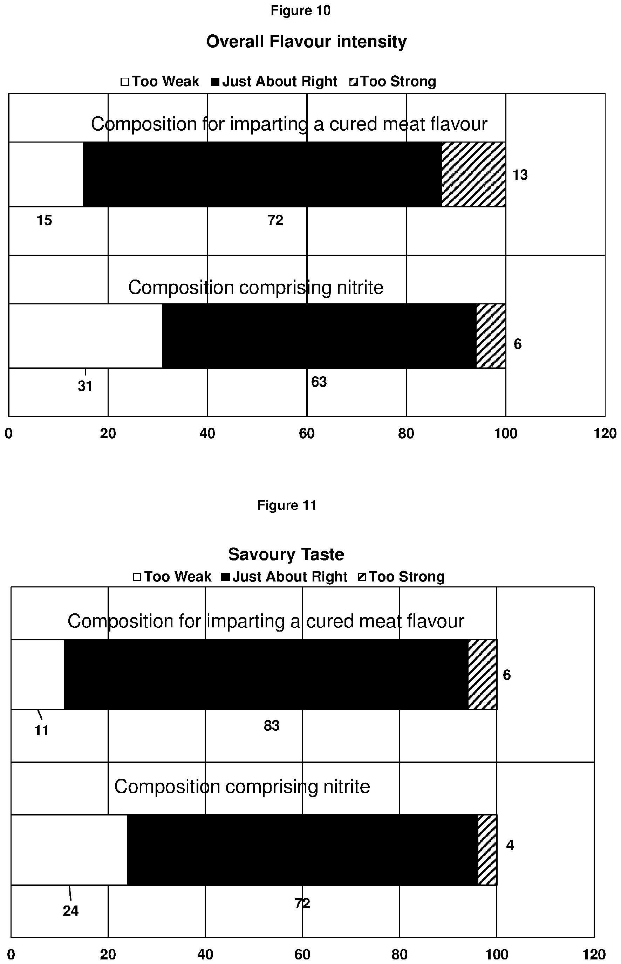

The results of the sensory testing are illustrated in Figures 2-11.

The results demonstrate that a composition according to the invention comprises volatile compounds that can impart the perception of a cured meat appearance and/or flavour to foodstuff products not having a cured meat appearance and/or flavour, and so a composition according to the invention can be used to impart a cured meat appearance and/or flavour to foodstuff products without the use (or with reduced amounts) of salt, sugar, nitrate, and/or nitrite; while maintaining a cured meat appearance and/or flavour comparable to that obtained using a traditional curing agent such as nitrite. Visual and textural perception of a cured meat foodstuff product was also comparable when foodstuff products were contacted with a composition according to the invention.

## Claims

1. A composition for imparting a cured meat appearance and/or flavour, the composition comprising at least one volatile compound selected from:
(a) acetic acid;
(b) propionic acid;
(c) pivalic acid;
(d) 1,2'-dipropylene glycol-1'methyl ether;
(e) 1,1'-dipropylene glycol-2'methyl ether;
(f) 2-ethylhexanol;
(g) guaiacol;
(h) nonanal;
(i) linalool;
(j) 4-methyloctanol;
(k) 6-methyloctanol;
(l) 4-terpineol;
(m) alpha-terpineol;
(n) decanal;
(o) eugenol;
(p) trans-6,10-dimethyl-5,9-undecadien-2-one;
(q) 2,4,4-trimethylpentan-1,3-diol diisobutyrate;
(r) methyl dihydrojasmonate; and
(s) beta-turmerone.

2. A composition according to claim 1, wherein the composition comprises all of the volatile compounds.

3. A composition according to claim 1 or 2, wherein the composition comprises at least one volatile compound selected from:
(a) 4.24 % acetic acid;
(b) 50.96 % propionic acid;
(c) 0.19 % pivalic acid;
(d) 11.62 % 1,2'-dipropylene glycol-1'methyl ether;
(e) 10.22 % 1,1'-dipropylene glycol-2'methyl ether;
(f) 6.92 % 2-ethylhexanol;
(g) 0.77% guaiacol;
(h) 3.19 % nonanal;
(i) 2.35 % linalool;
(j) 1.19 % 4-methyloctanol;
(k) 0.81 % 6-methyloctanol;
(l) 1.25 % 4-terpineol;
(m) 0.67 % alpha-terpineol;
(n) 1.31 % decanal;
(o) 1.03 % eugenol;
(p) 0.72 % trans-6,10-dimethyl-5,9-undecadien-2-one;
(q) 2.38 % 2,4,4-trimethylpentan-1,3-diol diisobutyrate;
(r) 0.16 % methyl dihydrojasmonate; and
(s) 0.04 % beta-turmerone;
each relative to the total amount of volatile compounds (a) - (s) of the composition.

4. A composition according to any one of claims 1-4, wherein the composition comprises the volatile compounds as defined in Figure 1.

5. A composition according to any one of claims 1-4, wherein the composition comprises:
(a) 2.0 - 3.0 %(w/w) at least one anthocyanin; and
(b) 0.1 - 80.0 %(w/w) at least one organic acid.

6. A composition according to claim 5, wherein the composition further comprises 10.0 - 20.0 %(w/w) at least one phosphate.

7. A composition according to claim 5 or 6, wherein the composition comprises 2.2 - 2.8 %(w/w) anthocyanin.

8. A composition according to any one of claims 5-7, wherein the composition comprises 27.0 - 35.0 %(w/w) at least one extract comprising anthocyanin.

9. A composition according to any one of claims 6-8, wherein the composition comprises 23.0 - 33.3 %(w/w) a composition comprising at least one of E450 and E451.

10. A composition according to any one of claims 5-9, wherein the at least one organic acid is acetic acid (ethanoic acid) and propionic acid (propanoic acid) or a salt each thereof.

11. A composition according to any one of claims 5-10, wherein the composition comprises 0.1 - 9.5 %(w/w) acetic acid and 1.4 - 78.5 %(w/w) propionic acid.

12. A composition according to any one of claims 5-11, wherein the composition comprises 5.0 - 7.0 %(w/w) spirit vinegar.

13. A composition according to any one of claims 1-12, wherein the composition further comprises 81.5 - 84.4 %(w/w) water.

14. A composition according to any one of claims 1-13, wherein the composition comprises 7.5 %(w/w) sodium chloride salt.

15. A method for imparting a cured meat appearance and/or flavour to a foodstuff product, the method comprising the steps of:
(a) providing a composition according to any one of claims 1-14;
(b) contacting the composition with the foodstuff product; and
(c) imparting a cured meat appearance and/or flavour to the foodstuff product.
